# FASCICULE DE BREVET EUROPEEN

(11) **EP 0 508 864 B1**
(45) Date de publication et mention de la délivrance du brevet: **15.12.1999**
(21) Numéro de dépôt: 92400929.3
(22) Date de dépôt: 03.04.1992
(51) Int. Cl.: B32B 17/10, C03C 27/12, B32B 27/22, B32B 31/00

(54) **Vitrage feuilleté**
Verbundglasscheibe
Laminated glass sheet

(30) Priorité: 09.04.1991 FR 9104287
(43) Date de publication de la demande: 14.10.1992
(73) Titulaire: SAINT-GOBAIN VITRAGE, 92400 Courbevoie (FR)
(72) Inventeur: Chaussade, Pierre, F-45600 Sully S/Loire (FR); Naoumenko, Yves, F-45460 Les Bordes (FR)
(74) Mandataire: Muller, René

(56) Documents cités:
- EP-A- 0 054 466
- DE-B- 2 332 915
- FR-A- 1 317 551
- US-A- 2 526 728
- US-A- 3 178 334
- US-A- 3 437 552
- US-A- 4 130 684

## Description

La présente invention concerne un vitrage feuilleté pour véhicule de transport, en particulier un vitrage pour avion, notamment un pare-brise pour avion.

Dans les vitrages feuilletés pour avions comprenant au moins deux feuilles de verre trempées thermiquement ou chimiquement, la couche intercalaire thermoplastique utilisée est constituée généralement par plusieurs plis en polyvinylbutyral plastifié (désigné par la suite dans la description par PVB). Le choix du PVB provient de ce que le PVB présente un module en traction élevé et un allongement à la rupture important et qu'il peut remplir un rôle d'absorbeur d'énergie tout en assurant l'étanchéité d'un vitrage dans lequel toutes les feuilles de verre sont brisées.

Lorsqu'un tel vitrage feuilleté est placé dans les conditions habituelles d'un vol à haute altitude, il est soumis d'une part à des différences de pressions importantes entre ses deux faces, et d'autre part à des différences de températures également importantes entre ces mêmes faces. Comme le PVB présente un coefficient de dilatation bien supérieur à celui des feuilles de verre, le vitrage est soumis dès lors à des contraintes notamment à des contraintes en cisaillement importantes, s'exerçant surtout au niveau des bords du vitrage. Ces contraintes élevées peuvent encore être augmentées lorsque le vitrage est soumis à des chocs, en particulier à basse température, par exemple lors d'impacts d'oiseaux, le PVB présentant à ces basses températures inférieures à 0°C, un module en traction fortement augmenté.

Le problème lié aux contraintes est encore accentué lorsque l'intercalaire comporte, noyé dans ses bords, une ceinture périphérique métallique ou en une matière stratifiée, augmentant la rigidité du vitrage et/ou permettant ou facilitant le cas échéant un montage, par boulonnage par exemple, du vitrage dans la baie de carrosserie du cockpit.

Des solutions ont déjà été proposées pour diminuer les contraintes évoquées ci-dessus, et pour réduire par conséquent les risques de défaillance du vitrage. Une des solutions consiste à appliquer un matériau agissant comme séparateur dans la partie marginale du vitrage. Cette solution peut convenir pour des vitrages de faibles dimensions. Elle n'est cependant généralement pas satisfaisante pour des vitrages de la taille d'un pare-brise d'avion. En outre, les matériaux séparateurs peuvent favoriser la pénétration de l'humidité dans l'intercalaire PVB, entrainant des pertes d'adhésion en des emplacements non désirés, ainsi que des pertes des qualités optiques du vitrage, en particulier de la transparence. En plus, les matériaux séparateurs ne présentent pas la qualité optique des couches employées dans les vitrages feuilletés, et leur utilisation réduit le champ de vision du vitrage.

On a aussi proposé, d'après la publication de brevet FR-A-2 310 979 de placer un film continu en polyuréthane entre la couche de PVB et la feuille de verre. Le film de polyuréthane dévie l'effort de cisaillement réduisant ainsi l'effet de la contraction thermique du PVB.

Cette solution présente encore des inconvénients. Elle nécessite généralement une activation de l'adhésion pour le polyuréthane sur la totalité de la surface de contact avec le verre. Elle implique en outre un interface supplémentaire entre deux produits thermoplastiques différents, en particulier d'indices de réfraction différents, ce qui peut induire à nouveau des défauts optiques dans le vitrage.

Lorsqu'en outre les feuilles de verre au contact de l'intercalaire sont des feuilles de verre trempées chimiquement, les contraintes signalées précédemment peuvent conduire à un clivage du verre, c'est-à-dire à une rupture dans un plan sensiblement parallèle au plan du verre.

L'invention obvie aux inconvénients cités. Elle propose une nouvelle structure de vitrage feuilleté qui présente les propriétés mécaniques et optiques recherchées, lesquelles se conservent dans le temps et dans les conditions de températures et de pressions auxquelles peut être soumis un vitrage avion.

Le vitrage selon l'invention comprend au moins deux feuilles de verre liées par un intercalaire en PVB constitué d'une pluralité de couches ou plis, cet intercalaire ne s'étendant pas au delà de la périphérie de la feuille de verre la plus large (de plus grandes dimensions) et présentant dans au moins une des deux couches superficielles au contact des feuilles de verre, un taux de plastifiant plus élevé que le taux de plastifiant dans la ou les couches intérieures de l'intercalaire, le rapport entre le taux de plastifiant de la couche superficielle et celui de la ou des couches intérieures étant compris entre 1,2 et 3 et le taux de plastifiant est compris entre 30 et 45 parts de plastifiant pour 100 parts de résine de PVB pour le PVB plastifié des couches superficielles et compris entre 15 et 25 parts de plastifiant pour le PVB plastifié de la ou des couches intérieures.

Sous un des aspects du vitrage selon l'invention, les deux couches superficielles (ou extérieures) au contact des feuilles de verre présentent un taux de plastifiant plus élevé que celui utilisé pour la ou les couches intérieures.

La teneur en plastifiant influe sur certaines propriétés mécaniques du PVB plastifié et en particulier sur le module d'élasticité.

Généralement, plus le taux de plastifiant est élevé et plus le module d'élasticité est faible. A titre d'exemple, un PVB présentant un taux de plastifiant de 40 parts pour 100 parts de résine PVB présente un module d'élasticité à 0°C de 60 MPa environ, alors qu'un PVB présentant un taux de plastifiant de 20 parts pour 100 parts de résine PVB présente un module d'élasticité à 0°C de 120 MPa environ.

Sous un des aspects du vitrage selon l'invention, l'intercalaire en PVB présente de préférence une teneur en plastifiant comprise entre 35 et 42 parts de plastifiant pour au moins une des deux couches extérieures et une teneur en plastifiant comprise entre 17 et 22 parts de plastifiant pour la ou les couches intérieures. (Les parts ou taux sont toujours en poids).

Dans une forme de réalisation du vitrage selon l'invention, le taux de plastifiant du PVB de l'intercalaire décroit régulièrement ou par paliers, un palier correspondant par exemple à au moins un pli de l'intercalaire, en partant de la face au contact du verre jusqu'au pli médian.

Dans une forme de réalisation du vitrage selon l'invention, seul deux taux de plastifiant sont utilisés pour le PVB de l'intercalaire, un taux élevé pour au moins une des deux (généralement les deux) couches extérieures et un taux plus faible pour la couche intérieure.

Le rapport entre les épaisseurs des couches présentant un taux élevé de plastifiant et les épaisseurs des couches présentant un taux plus faible peut varier largement et notamment selon la taille du vitrage, selon son utilisation par exemple en tant que pare-brise d'avion, selon le nombre de plis (ou couches) qu'il comporte au total.

A titre d'indication, pour un pare-brise d'avion le rapport des épaisseurs des couches de PVB à taux de plastifiant élevé aux épaisseurs des couches de PVB à taux de plastifiant plus faible pour un même intercalaire peut être compris entre 0,05 et 1.

Le PVB plastifié est obtenu par mélange de la résine de PVB avec le plastifiant. Les plastifiants convenables sont ceux connus pour le PVB. On peut citer par exemple des adipates de di-alkyles, des adipates mixtes d'alkyle et d'alkylaryle, des esters carboxyliques du glycol, des mélanges de ces produits.

Les deux feuilles de verre liées par l'intercalaire qui selon l'invention présente des teneurs en plastifiant différentes selon la couche, sont avantageusement des feuilles de verre trempées chimiquement, c'est-à-dire des feuilles de verre ayant subi un traitement de renforcement chimique connu en soi. Ce traitement consiste par exemple en un échange d'ions dans les couches superficielles du verre, les ions de petite taille étant remplacés par des ions de plus grande taille.

Une feuille de verre trempée chimiquement présente généralement des couches en compression d'épaisseurs plus faibles que celles présentées par des feuilles de verre trempées thermiquement, et elles peuvent alors dans certaines conditions subir une rupture par clivage du verre. La structure du vitrage selon l'invention élimine ce problème.

Le vitrage selon l'invention présente de très bonnes propriétés de résistance aux différentes contraintes auxquelles il est soumis, notamment à haute altitude lorsqu'il s'agit d'un vitrage avion. Néanmoins, on peut encore améliorer ces propriétés, le cas échéant, en combinant l'intercalaire selon l'invention avec des éléments séparateurs dans la partie marginale du vitrage, ou avantageusement avec au moins un anneau disposé entre l'intercalaire et une feuille de verre dans la partie marginale du vitrage, cet anneau présentant des propriétés d'adhésion avec l'intercalaire et avec le verre, cet anneau étant formé d'une matière plastique présentant des propriétés d'allongement supérieures à celles de la couche intérieure de l'intercalaire, ainsi qu'un module au cisaillement plus faible.

La matière plastique formant l'anneau peut être choisie parmi des silicones thermodurcissables, des élastomères thermodurcissables notamment des polyuréthanes thermodurcissables, des élastomères thermoplastiques notamment des polyuréthanes thermoplastiques.

Ces matières plastiques pouvant être utilisées présentent un allongement à la rupture compris entre 200 et 700 % et de préférence entre 300 et 600 % et un module au cisaillement compris entre 1 et 100 MPa et de préférence entre 10 et 80 MPa, ces valeurs étant des valeurs mesurées pour des températures comprises entre -30°C et 40°C environ.

L'épaisseur de l'anneau est de préférence comprise entre 5 et 15 % de l'épaisseur du PVB séparant les deux feuilles de verre. L'anneau est de préférence chevauché par la couche superficielle en PVB à taux de plastifiant élevé. L'anneau peut remplacer, dans la partie marginale du vitrage, une ou plusieurs épaisseurs (plis) de PVB à faible taux de plastifiant.

La largeur de l'anneau est par exemple comprise entre 15 et 100 mm. Cette largeur dépend également des dimensions du vitrage. Elle est généralement comprise entre 2 et 15 % de ces dimensions en longueur ou en largeur. La largeur de l'anneau peut aussi varier le long du pourtour d'un même vitrage selon sa forme et ses dimensions.

Pour éviter des contraintes localisées au niveau du bord intérieur de l'anneau, l'épaisseur du bord de cet anneau peut décroitre progressivement vers la face du verre. Lorsque l'anneau est formé de plusieurs plis, la structure du bord peut être une structure en marches d'escalier, la hauteur de chaque marche correspondant à l'épaisseur de chaque pli, qui de préférence est inférieure à 0,5 mm. Lorsqu'il est formé d'un seul pli, la structure de bord peut présenter une forme en biseau. L'angle d'inclinaison de la ligne de décroissance du bord est de préférence inférieur à 45°.

D'autres caractéristiques et avantages de l'invention apparaitront dans la description suivante d'exemples de réalisation faite en référence aux figures.
La figure 1 est une vue en coupe d'un vitrage selon l'invention.
La figure 2 est une vue en coupe d'une autre réalisation d'un vitrage selon l'invention.
La figure 3 est une vue en coupe d'une troisième réalisation d'un vitrage selon l'invention.

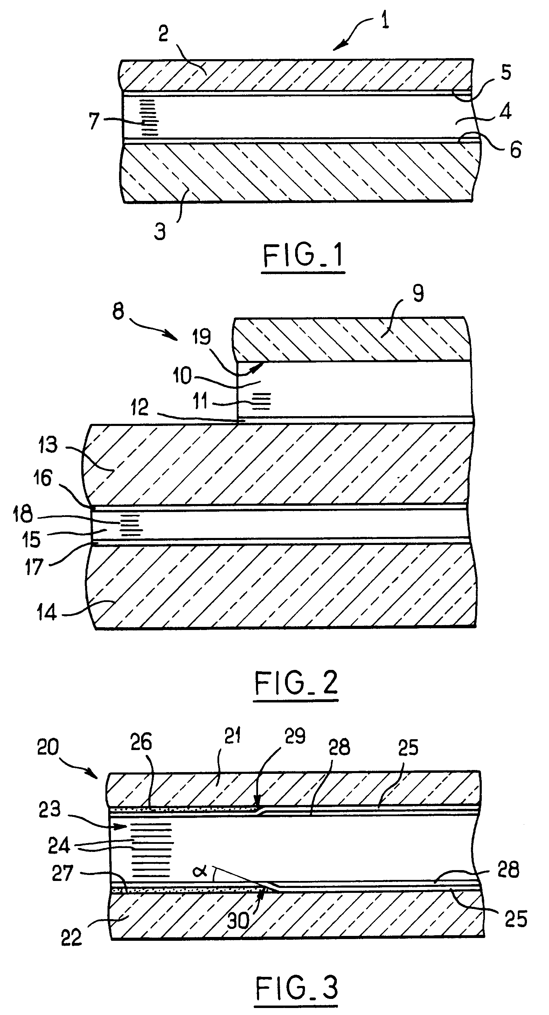

La figure 1 représente un vitrage 1 selon l'invention formé de deux feuilles de verre trempées chimiquement, une feuille de verre extérieure 2 de 4 mm d'épaisseur et une feuille de verre intérieure 3 de 6 mm d'épaisseur entre lesquelles est disposé un intercalaire 4 formé de 7 plis de PVB. Les deux plis extérieurs 5, 6 au contact des feuilles de verre présentent une épaisseur de 0,76 mm et sont formés de PVB à haut taux de plastifiant, par exemple 37,5 parts d'adipate de di-n-hexyle pour 100 parts de PVB. Les cinq plis intérieurs 7, de 0,5 mm d'épaisseur chacun sont formés de PVB à taux de plastifiant plus faible, par exemple 19,5 parts d'adipate de di-n-hexyle pour 100 parts de résine PVB.

Le vitrage présente les propriétés mécaniques de résistance aux chocs, même à basse température, par exemple à -20°C, et il ne montre aucun phénomène de délamination des couches, d'écaillage du verre ou de clivage. Sa transparence est parfaite.

Sur la figure 2, on a représenté en coupe une autre réalisation du vitrage selon l'invention, pouvant être utilisé comme pare-brise (ou glace frontale) pour avion. Ce vitrage 8 comprend une feuille de verre 9 semi trempée thermiquement de 4 mm d'épaisseur, un premier intercalaire 10 formé de 9 plis 11 de 0,5 mm d'épaisseur en PVB plastifié avec 19,5 parts de plastifiant pour 100 parts de résine de PVB, et d'un pli 12 de 0,76 mm d'épaisseur en PVB plastifié avec 39 parts de plastifiant pour 100 parts de résine. Ce pli 12 est au contact d'une seconde feuille de verre 13 trempée chimiquement, de 8 mm d'épaisseur. (Un pli analogue avec un taux de plastifiant élevé peut aussi être prévu entre la feuille de verre 9 et les plis 11 de l'intercalaire). Entre cette seconde feuille de verre 13 et une troisième feuille de verre 14 qui est également trempée chimiquement, est disposé un second intercalaire 15 comprenant deux plis extérieurs 16, 17 au contact des feuilles de verre 13, 14, de 0,76 mm d'épaisseur formés de PVB plastifié avec 39 parts de plastifiant pour 100 parts de résine de PVB, et 6 plis intérieurs 18, de 0,5 mm d'épaisseur formés de PVB plastifié avec 19,5 parts de plastifiant pour 100 parts de résine de PVB.

La feuille de verre extérieure 9 peut comporter une résistance chauffante par exemple sous forme d'une couche conductrice chauffante 19 connue en soi.

Le vitrage décrit ci-dessus satisfait au test de qualification d'un pare-brise d'avion gros porteur. En particulier il résiste parfaitement au choc à l'oiseau sans rupture, notamment par clivage des feuilles de verre trempées chimiquement.

La figure 3 représente un vitrage 20 selon l'invention formé de deux feuilles de verre trempées chimiquement, une feuille de verre extérieure 21 et une feuille de verre intérieure 22 entre lesquelles est disposé un intercalaire 23 formé de 10 plis 24 de PVB plastifié à 19,5 parts de plastifiant, de 0,5 mm d'épaisseur,et d'un pli 25 de PVB plastifié à 39 parts de plastifiant au contact de chacune des deux feuilles de verre. En périphérie du vitrage, ces plis 25 chevauchent deux anneaux 26, 27 en polyuréthane de 0,5 mm d'épaisseur. Pour compenser la surépaisseur dûe à l'anneau, le premier pli 28 de PVB plastifié à 19,5 parts présente des dimensions réduites d'une largeur correspondant à la largeur de l'anneau. Le polyuréthane formant les anneaux est par exemple un élastomère thermodurcissable, obtenu par injection ou moulage, ou encore un polyuréthane thermoplastique. Ce polyuréthane présente un allongement à la rupture de 350 % et un module au cisaillement de 60 MPa mesurés à une température de -30°C. Ce polyuréthane adhère au verre et au PVB. Les valeurs d'adhésion mesurées d'après le test de pelage décrit ci-après est de 15 daN/cm pour l'adhésion polyuréthane-verre.

Les valeurs d'adhésion, sont mesurées à partir d'éprouvettes en verre de 8 x 8 cm revêtues d'une couche obtenue à partir du polyuréthane formant l'anneau. On découpe une languette de 1 cm de large dans la couche de revêtement et on la décolle sur 3 cm.

Le test proprement dit consiste à tirer sur la languette, perpendiculairement à la surface du verre, à une vitesse de traction de 2 cm/min. On mesure la force nécessaire pour le pelage.

La largeur d'un anneau est par exemple de 20 mm alors que le vitrage présente des dimensions en longueur et en largeur de l'ordre de 500 mm.

Les bords intérieurs 29, 30 des anneaux peuvent présenter une forme en biseau, l'angle α étant de préférence inférieur à 45°, et ici par exemple de 20 degrés environ. Cette diminution progressive de l'épaisseur de l'anneau procurée par cette forme en biseau évite tout risque de distorsion optique et procure une meilleure liaison verre-polyuréthane PVB.

## Revendications

1. Vitrage feuilleté, notamment pare-brise d'avion, comprenant au moins deux feuilles de verre (2, 3, 13, 14, 21, 22) liées par un intercalaire (4, 5, 23) en polyvinylbutyral constitué d'une pluralité de couches ou plis, **caractérisé en ce que** l'intercalaire en polyvinylbutyral ne s'étend pas au delà de la périphérie de la feuille de verre de plus grande dimension, **en ce qu**'il présente dans au moins (5, 6, 16, 17, 25) une des deux couches superficielles au contact des feuilles de verre, un taux de plastifiant plus élevé que dans la ou les couches intérieures (7, 18, 24) de l'intercalaire, le rapport entre le taux de plastifiant de la couche superficielle et celui de la ou des couches intérieures étant compris entre 1,2 et 3 et **en ce que** le taux de plastifiant est compris entre 30 et 45 parts de plastifiant pour 100 parts de résine de PVB pour le PVB plastifié des couches superficielles et compris entre 15 et 25 parts de plastifiant pour le PVB plastifié de la ou des couches intérieures.

2. Vitrage feuilleté selon la revendication 1, **caractérisé en ce que** les deux feuilles de verre sont des feuilles de verre trempées chimiquement.

3. Vitrage feuilleté selon une des revendications 1 ou 2, **caractérisé en ce que** le taux de plastifiant du PVB de l'intercalaire décroît par paliers, en partant de la face au contact du verre jusqu'au pli médian.

4. Vitrage feuilleté selon une des revendications 1 ou 2, **caractérisé en ce que** le taux de plastifiant du PVB de l'intercalaire décroît régulièrement en partant de la face au contact du verre jusqu'au pli médian.

5. Vitrage feuilleté selon la revendication 1, **caractérisé en ce que** le taux de plastifiant est compris entre 35 et 42 parts de plastifiant pour 100 parts d'une résine de PVB pour le PVB plastifié des couches superficielles et compris entre 17 et 22 parts de plastifiant pour le PVB plastifié de la ou des couches intérieures.

6. Vitrage feuilleté selon la revendication 5, **caractérisé en ce que** le rapport des épaisseurs entre les couches superficielles à haut taux de plastifiant et les couches intérieures à taux plus faible est compris entre 0,05 et 1.

7. Vitrage feuilleté selon une des revendications 1 à 6, **caractérisé en ce qu**'il comprend trois feuilles de verre liées par deux intercalaires en PVB.

8. Vitrage feuilleté selon une des revendications 1 à 7, **caractérisé en ce que** le plastifiant du PVB est choisi parmi les adipates de di-alkyles, les adipates mixtes d'alkyle et d'alkylaryle, des esters carboxyliques du glycol, des mélanges de ces produits.

9. Vitrage feuilleté selon une des revendications 1 à 8, **caractérisé en ce qu**'il comprend dans sa partie marginale au moins un anneau (26, 27) en une matière plastique présentant un module au cisaillement plus faible et des propriétés d'allongement supérieures à celles du PVB de la des couches intérieures de l'intercalaire.

10. Vitrage feuilleté selon la revendication 9, **caractérisé en ce que** l'anneau est chevauché par la couche superficielle du PVB à taux de plastifiant élevé, dans la partie marginale du vitrage.

11. Application d'un intercalaire en polyvinylbutyral plastifié présentant des couches extérieures comprenant un taux de plastifiant plus élevé que le taux de plastifiant pour la ou les couches intérieures, en tant qu'intercalaire entre deux feuilles de verre trempées chimiquement pour la fabrication d'un vitrage avion afin d'éviter un clivage du verre sous l'action d'un choc.

## Claims

1. Laminated glazing, particularly for an aircraft windscreen, comprising at least two glass sheets (2, 3, 13, 14, 21, 22) linked by a polyvinyl butyral spacer (4, 5, 23) constituted by a plurality of layers or plies, characterized in that the polyvinyl butyral spacer does not extend beyond the periphery of the glass sheet having the largest size, in that it has in at least one (5, 6, 16, 17, 25) of the two surface layers in contact with the glass sheet a higher plasticizer content than in the inner layer or layers (7, 18, 24) of the spacer, the ratio between the plasticizer content of the surface layer and that of the inner layer or layers being between 1, 2 and 3 and in that the plasticizer content is between 30 and 45 parts plasticizer for 100 parts PVB resin for plasticized PVB of the surface layers and between 15 and 25 plasticizer parts for the plasticized PVB of the inner layer or layers.

2. Laminated glazing according to claim 1, characterized in that the two glass sheets are chemically toughened glass sheets.

3. Laminated glazing according to one of the claims 1 or 2, characterized in that the plasticizer content of the PVB of the spacer decreases in ranges starting from the face in contact with the glass and extending up to the median ply.

4. Laminated glazing according to one of the claims 1 or 2, characterized in that the plasticizer content of the PVB of the spacer decreases regularly starting from the face in contact with the glass and extending up to the median ply.

5. Laminated glazing according to claim 1, characterized in that the plasticizer content is between 35 and 42 parts plasticizer for 100 parts of a PVB resin for the plasticized PVB of the surface layers and between 17 and 22 parts plasticizer for the plasticized PVB of the inner layer or layers.

6. Laminated glazing according to claim 5, characterized in that the ratio of the thicknesses between the surface layers having a high plasticizer content and the inner layers with a lower content is between 0.05 and 1.

7. Laminated glazing according to one of the claims 1 to 6, characterized in that it comprises three glass sheets linked by two PVB spacers.

8. Laminated glazing according to one of the claims 1 to 7, characterized in that the plasticizer of the PVB is chosen from among dialkyl adipates, mixed alkyl and alkylaryl adipates, glycol carboxylates and mixtures of these products.

9. Laminated glazing according to one of the claims 1 to 8, characterized in that, in its marginal portion, it comprises at least one ring (26, 27) of a plastics material having a lower shear modulus and better elongation properties than those of the PVB of the inner layer or layers of the spacer.

10. Laminated glazing according to claim 9, characterized in that, in the marginal portion of the glazing, the ring is overlapped by the surface layer of the PVB having a high plasticizer content.

11. Application of a plasticized polyvinyl butyral spacer having outer layers with a higher plasticizer content than that of the inner layer or layers, as a spacer between two chemically toughened glass sheets for the manufacture of an aircraft glazing in order to prevent a cleaving of the glass under the effect of an impact.

## Patentansprüche

1. Verbundverglasung_{,} insbesondere Flugzeugfrontscheibe, welche mindestens zwei Glasscheiben (2, 3, 13, 14, 21, 22) umfaßt, die durch eine Polyvinylbutyral-Zwischenfolie (4, 5, 23) verbunden sind, die aus einer Vielzahl von Schichten oder Lagen besteht, **dadurch gekennzeichnet, daß** die Polyvinylbutyral-Zwischenfolie sich nicht über den Umfang der Glasscheibe mit den größten Abmessungen hinaus erstreckt, **und daß** sie in mindestens einer (5, 6, 16, 17, 25) der zwei in Kontakt mit den Glasscheiben befindlichen Oberflächenschichten einen Weichmacheranteil aufweist, der höher als in der/den Innenschicht/en (7, 18, 24) der Zwischenfolie ist, wobei das Verhältnis von Weichmacheranteil der Oberflachenschicht zu dem der Innenschicht/en 1,2 bis 3 beträgt **und** der Weichmacheranteil 30 bis 45 Teile Weichmacher auf 100 Teile PVB-Harz für das weichgemachte PVB der Oberflächenschichten und 15 bis 25 Teile Weichmacher für das weichgemachte PVB der Innenschicht/en beträgt.

2. Verbundverglasung nach Anspruch 1, **dadurch gekennzeichnet, daß** die zwei Glasscheiben chemisch vorgespannte Glasscheiben sind.

3. Verbundverglasung nach Anspruch 1 oder 2, **dadurch gekennzeichnet, daß** der Weichmacheranteil des PVB der Zwischenfolie ausgehend von der im Kontakt mit dem Glas befindlichen Seite bis zur mittleren Lage stufenweise abnimmt.

4. Verbundverglasung nach Anspruch 1 oder 2, **dadurch gekennzeichnet, daß** der Weichmacheranteil des PVB der Zwischenfolie ausgehend von der im Kontakt mit dem Glas befindlichen Seite bis zur mittleren Lage regelmäßig abnimmt.

5. Verbundverglasung nach Anspruch 1, **dadurch gekennzeichnet, daß** der Weichmacheranteil 35 bis 42 Teile Weichmacher auf 100 Teile eines PVB-Harzes für das weichgemachte PVB der Oberflächenschichten und 17 bis 22 Teile Weichmacher für das weichgemachte PVB der Innenschicht/en beträgt.

6. Verbundverglasung nach Anspruch 5, **dadurch gekennzeichnet, daß** das Dickenverhältnis der Oberflächenschichten mit hohem Weichmacheranteil zu den Innenschichten mit niedrigerem Anteil 0,05 bis 1 beträgt.

7. Verbundverglasung nach einem der Ansprüche 1 bis 6, **dadurch gekennzeichnet, daß** sie drei durch zwei PVB-Zwischenfolien verbundene Glasscheiben umfaßt.

8. Verbundverglasung nach einem der Ansprüche 1 bis 7, **dadurch gekennzeichnet, daß** der Weichmacher für das PVB aus Dialkyladipaten, Alkyl-Alkylaryl-Adipaten, Glykolestern und Gemischen dieser Produkte ausgewählt ist.

9. Verbundverglasung nach einem der Ansprüche 1 bis 8, **dadurch gekennzeichnet, daß** sie in ihrem Randbereich mindestens einen Ring (26, 27) aus einem Kunststoff enthält, der einen niedrigeren Schermodul und bessere Dehnungseigenschaften als das PVB der Innenschicht/en der Zwischenfolie aufweist.

10. Verbundverglasung nach Anspruch 9, **dadurch gekennzeichnet, daß** der Ring im Randbereich der Verglasung von der Oberflächenschicht aus PVB mit hohem Weichmacheranteil überlappt wird.

11. Verwendung einer Zwischenfolie aus weichgemachtem Polyvinylbutyral, welche Außenschichten besitzt, deren Weichmacheranteil hoher als der Weichmacheranteil der Innenschicht/en ist, als Zwischenfolie zwischen zwei chemisch vorgespannten Glasscheiben für die Herstellung einer Flugzeugverglasung, um ein Zerspringen des Glases unter Schlageinwirkung zu verhindern.
